# EUROPÄISCHE PATENTANMELDUNG

(11) **EP 1 662 055 A2**
(43) Veröffentlichungstag der Anmeldung: **31.05.2006**
(21) Anmeldenummer: 05024618.0
(22) Anmeldetag: 11.11.2005
(51) Int. Cl.: E03C 1/042

(54) **Sanitäre Unterputzarmatur mit einer Unterputzabdeckplatte**

(30) Priorität: 19.11.2004 DE 102004055881
(71) Anmelder: HANSA METALLWERKE AG, 70567 Stuttgart (DE)
(72) Erfinder: Harsch, Martin, 74395 Mundelsheim (DE)
(74) Vertreter: Ostertag, Ulrich

(57) **Zusammenfassung**

Es wird eine sanitäre Unterputzarmatur mit einer Unterputzabdeckplatte(1), die mit wenigstens einer Befestigungsschraube (5) befestigbar ist, beschrieben. Der Schraubenkopf (4) der Befestigungsschraube (5) ist mit einer entfernbaren Schraubenabdeckung (8) verdeckt.

## Beschreibung

Die Erfindung betrifft eine sanitäre Unterputzarmatur mit einer Unterputzabdeckplatte, die mit wenigstens einer Befestigungsschraube befestigbar ist.

Bekannte sanitäre Unterputzarmaturen werden in ihrer Einbaunische mit Unterputzabdeckplatten abgedeckt. Diese Unterputzabdeckplatten sind mit wenigstens einer Befestigungsschraube entweder an dem Gehäuse der sanitären Unterputzarmatur selbst oder an einem Einbaukasten, in den die sanitäre Unterputzarmatur eingebaut ist, befestigt. Die oftmals optisch unschönen Schraubenköpfe sind hierbei bisher deutlich sichtbar und oftmals ungeschützt gegen Verschmutzung beziehungsweise Feuchtigkeit.

Aufgabe der vorliegenden Erfindung ist es, eine sanitäre Unterputzarmatur der eingangs genannten Art zu schaffen, die ein ansprechendes Design aufweist und darüber hinaus besser gegen Verschmutzung beziehungsweise Feuchtigkeit geschützt ist.

Diese Aufgabe wird erfindungsgemäß dadurch gelöst, dass der Schraubenkopf der Befestigungsschraube mit einer entfernbaren Schraubenabdeckung verdeckt ist.

Erfindungsgemäß wird der Schraubenkopf mit einer Abdeckung verdeckt, so dass er nach außen hin nicht sichtbar ist und ein gefälliges Design entsteht. Darüber hinaus verhindert die Schraubenabdeckung das Eindringen von Schmutz und Feuchtigkeit in den Bereich hinter dem Schraubenkopf, so dass dieser geschützt ist. Bei Bedarf, beispielsweise wenn die Befestigungsschraube der Unterputzabdeckplatte gelöst werden muß, kann die Schraubenabdeckung entfernt werden.

Um auf zusätzliche Befestigungsmittel verzichten zu können, ist es besonders vorteilhaft, wenn die Schraubenabdeckung ein Befestigungsmittel, insbesondere ein einstükkig aus der Schraubenabdeckung hervorgehendes oder an diese angeformtes Steckelement, aufweist.

Zweckmäßig ist eine erste alternative Ausführungsform, bei der die Schraubenabdeckung am Schraubenkopf befestigt ist, so dass entsprechende komplementäre Schraubenkopf-Schraubenabdeckungspaare universell für unterschiedliche Unterputzabdeckplatten einsetzbar sind.

Alternativ hierzu kann die Schraubenabdeckung auch an der Unterputzabdeckplatte befestigt sein, so dass standardisierte Schrauben verwendet werden können.

Die erste Alternative lässt sich technisch besonders einfach realisieren, wenn der Schraubenkopf eine Zapfenaufnahme und die Schraubenabdeckung einen hierzu komplementären Zapfen aufweisen. Die axiale Bohrung des Schraubenkopfes kann beispielsweise eine Verlängerung eines ohnehin vorhandenen Schlitzes oder Kreuzschlitzes oder dergleichen im Schraubenkopf sein.

Statt dessen kann der Schraubenkopf einen Kragen und die Schräubenabdeckung einen hierzu komplementäres Langloch, insbesondere mit einer Klemmeinheit, aufweisen. Hiermit lässt sich eine besonders stabile Verbindung herstellen.

Eine weitere Möglichkeit besteht darin, dass der Schrau-benkopf einen Kugelaufsatz und die Schraubenabdeckung ein hierzu komplementäres Kugelklemmelement aufweist, so dass die Schraubenabdeckung einfach aufgesteckt werden kann.

Die zweite alternative Ausführungsform kann dahingehend verbessert werden, dass die Unterputzabdeckplatte ein Loch und die Schraubenabdeckung einen entsprechenden Kreuzzapfen aufweist. Auf diese Weise wird ein besonders einfach herzustellendes Befestigungsmittel realisiert.

Eine leicht steckbare und stabile Verbindung wird mit einer weiteren vorteilhaften Ausführungsform ermöglicht, bei der die Unterputzabdeckplatte ein Loch und die Schraubenabdeckung ein entsprechendes Kugelklemmelement aufweisen.

Alternativ kann die Unterputzabdeckplatte ein Loch und die Schraubenabdeckung ein entsprechendes Zylinderklemmelement aufweisen. Zylinderklemmelemente können technisch besonders einfach realisiert werden.

Ausführungsbeispiele der Erfindung werden nachfolgend anhand der Zeichnung näher erläutert; es zeigen
- Figur 1: schematisch einen seitlichen Schnitt durch ein erstes Ausführungsbeispiel, bei dem eine Unterputzabdeckplatte für eine sanitäre Unterputzarmatur mit einer Befestigungsschraube versehen ist, wobei ein Abdeckstopfen mit einer Zapfen-klemmung am Schraubenkopf befestigt ist;
- Figur 2: schematisch einen seitlichen Schnitt durch ein zweites Ausführungsbeispiel, bei dem eine Schraubenabdeckung mit einer Zapfenklemmung am Schraubenkopf befestigt ist;
- Figur 3: schematisch einen seitlichen Schnitt durch ein drittes Ausführungsbeispeil, bei dem die Schraubenabdeckung mit einer Langlochklemmung am Schraubenkopf befestigt ist;
- Figur 4: schematisch einen seitlichen Schnitt durch ein viertes Ausführungsbeispeil, bei dem die Schraubenabdeckung mit einer Kugelklemmung am schraubenkopf befestigt ist;
- Figur 5: schematisch einen seitlichen Schnitt durch ein fünftes Ausführungsbeispeil, bei dem die Schraubenabdeckung mit einer Kreuzklemmung an einer Altervativen Unterputzabdeckplatte befestigt ist;
- Figur 6: einen Schnitt der in Figur 5 dargestellten Unterputzabdeckplatte entlang der dortigen Linie VI-VI;
- Figur 7: schematisch einen seitlichen Schnitt durch ein sechstes Ausführungsbeispeil, bei dem die Schraubenabdeckung mit einer Kugelklemmung an der alternativen Unterputzabdeckplatte befestigt ist;
- Figur 8: einen Schnitt der in Figur 7 dargestellten Unterputzabdeckplatte entlang der dortigen Linie VIII-VIII;
- Figur 9: schematisch eine Draufsicht auf ein siebstes Ausführungsbeispeil, bei dem die Schraubenabdekkung mit einem Zylinderklemmelement an einer weiteren alternativen Unterputzabdeckplatte befestigt ist;
- Figur 10: schematisch die Vorderansicht der in Figur 9 dargestellten Unterputzabdeckplatte;
- Figur 11: schematisch einen seitlichen Schnitt durch die in Figur 9 dargestellte Unterputzabdeckplatte entlang der dortigen Linie XI-XI;
- Figur 12: schematisch einen seitlichen Schnitt durch die in Figur 9 dargestellte Unterputzabdeckplatte entlang der dortigen Linie XII-XII;
- Figur 13: schematisch einen seitlichen Schnitt durch die in Figur 9 dargestellte Unterputzabdeckplatte entlang der dortigen Linie XIII-XIII;
- Figur 14: eine Detailansicht des Bereichs XIV in Figur 13;
- Figur 15: schematisch einen seitlichen Schnitt durch die in Figur 9 dargestellte Unterputzabdeckplatte im Bereich einer Zapfenaufnahme entlang der dortigen Linie XV-XV;
- Figur 16: eine Detailansicht des Bereichs XVI in Figur 9.

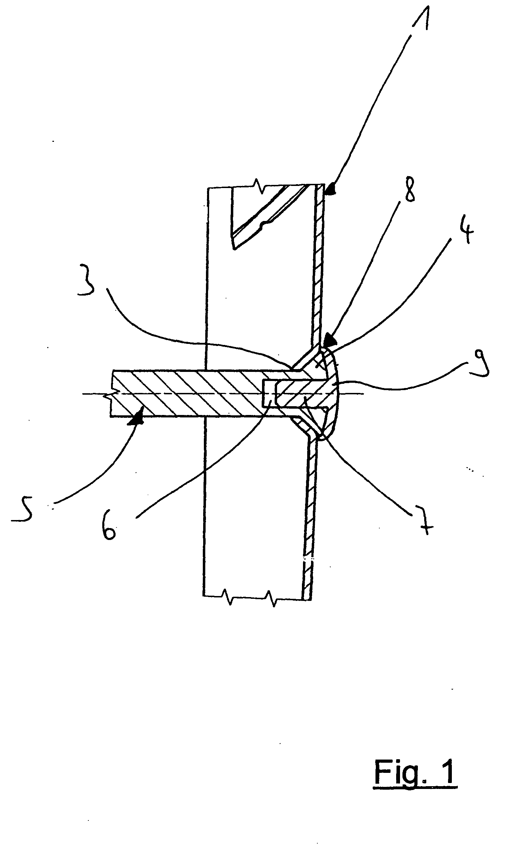

In Figur 1 ist eine ebene Unterputzabdeckplatte 1 gezeigt, die in der Figur von rechts an einem Gehäuse oder einem Einbaukasten einer nicht dargestellten sanitären Unterputzarmatur angeordnet ist.

Die Unterputzabdeckplatte 1 weist mehrere Verschraubungslöcher 3 auf, von denen eines därgestellt ist. Der Rand um das Verschraubungsloch 3 ist umlaufend um 45° nach innen gebogen, so dass eine 90° Senkung für einen Schraubenkopf 4 einer als Linsensenkschraube realisierte Befestigungsschraube 5 gebildet wird.

Mit den Befestigungsschrauben 5 ist die Unterputzabdeckplatte 1 mit der Gehäuse oder dem Einbaukasten verschraubt.

Im Schraubenkopf 4 ist mittig einer axiale Bohrung als Zapfenaufnahme 6 angeordnet. Sie dient zur Aufnahme eines kreiszylinderförmigen Zapfens 7 eines Abdeckstopfens 8, mit dem der Schraubenkopf 4 abgedeckt wird. Die Bohrung der Zapfenaufnahme 6 ist gerade so groß, dass der Zapfen 7 zunächst unter einem Widerstand einschiebbar, und anschließend darin festgeklemmt ist, so dass eine Zapfen-klemmung realisiert wird.

Der Abdeckstopfen 8 umfasst einen Abdeckschirm 9, der in Figur 1 von rechts betrachtet eine konvexe Oberfläche aufweist. Die Oberfläche seiner in Figur 1 linken Innenseite ist komplementär zur Oberfläche des Schraubenkopfs 4. Der Zapfen 7 geht mittig einstückig aus der Innenseite des Abdeckschirms 9 hervor.

Die Ausmaße des Abdeckschirms 9 sind gerade so groß, dass er den Schraubenkopf 4 geringfügig überragt und ihn vollständig abgedeckt.

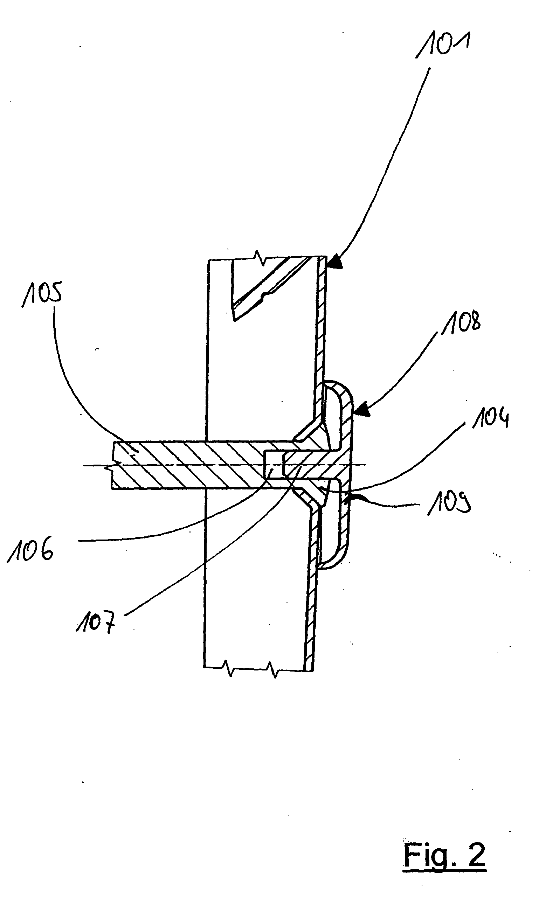

Ein zweites Ausführungsbeispiel mit einer der in Zusammen-hang mit dem ersten Ausführungsbeispiel in Figur 1 dargestellten Unterputzabdeckplatte 1 ähnlichen Uriterputzabdeckplatte 101 ist in Figur 2 dargestellt. Das zweite Ausführungsbeispiel unterscheidet sich vom ersten, in Figur 1 dargestellten Ausführungsbeispiel dadurch, dass statt des Abdeckstopfens 8 eine Schraubenabdeckung 108 mit einem Zapfen 107 in einer Zapfenaufnahme 106 einer Befestigungsschraube 105 angeordnet ist, die einen wesentlich größeren Abdeckschirm 109 aufweist, der deutlich über den Schraubenkopf 104 hinaus ragt.

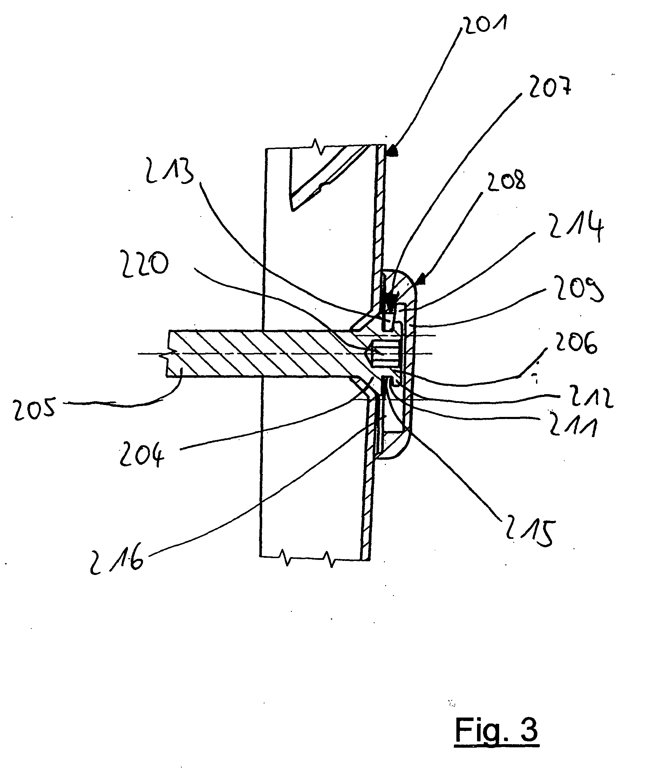

In Figur 3 ist ein drittes Ausführungsbeispiel mit einer der in Zusammenhang mit dem zweiten Ausführungsbeispiel in Figur 2 dargestellten Unterputzabdeckplatte 101 ähnlichen Unterputzabdeckplatte 201 dargestellt. Das in Figur 3 dargestellte Ausführungsbeispiel unterscheidet sich von dem in Figur 2 dargestellten, zweiten Ausführungsbeispiel dadurch, dass statt einer Zapfenklemmung eine Schraubenabdeckung 208 durch eine Langlochklemmung mit einem Schraubenkopf 204 verbunden ist.

Hierzu geht in Figur 3 rechts aus dem Schraubenkopf 204 einer Befestigungsschraube 205 ein koaxialer kreiszylin-derförmiger Aufsatz 206 einstückig hervor. Der Aufsatz 206 weist eine umlaufende Ringnut 211 auf, so dass in Figur 3 rechts von der Ringnut 211 ein Kragen 212 realisiert wird.

Darüber hinaus ist in dem Aufsatz 206 eine Innensechskantöffnung 220 eingebracht, in die ein entsprechender, nicht dargestellter Schlüssel zum Verschrauben der Befestigungsschraube 205 eingeführt werden kann.

Die Schraubenabdeckung 208 weist an ihrer in Figur 3 linken Innenseite eine Langlocheinheit 207 auf. Diese wird durch eine Innenwand 213 der Schraubenabdeckung 208 mitgebildet. Die Innenwand 213 links und ein Abdeckschirm 209 rechts begrenzen einen Zwischenraum 214, dessen Breite an seiner schmalsten Stelle der Breite des Kragens 212 entspricht.

Die Dicke der Innenwand 213 nimmt in Figur 3 von unten nach oben zu, so dass im seitlichen Schnitt betrachtet diese eine Keilform erhält. An ihrer dicksten Stelle ist die Innenwand 213 etwas dicker als die Ringnut 211 des Aufsatzes 206 breit ist. Mittig weist die Innenwand 213 ein in Figur 3 von unten nach oben verlaufendes Langloch 215 auf, dessen Durchmesser dem inneren Durchmesser der Ringnut 211 entspricht. Darüber hinaus weist die Innenwand 213 in ihrem unteren Bereich eine Öffnung 216 auf, die so groß ist, dass der Kragen 212 des Aufsatzes 206 hindurchpasst. Das in Figur 3 untere Ende des Langlochs 215 geht in die Öffnung 216 über.

Um die Schraubenabdeckung 208 an den Schraubenkopf 204 zu befestigen, wird sie mit ihrer Öffnung 216 über den Aufsatz 206 geschoben. Die Schraubenabdeckung 208 wird anschließend in Figur 3 nach unten geschoben, wobei die Ringnut 211 des Schraubenkopfes 204 entlang des Langlochs 215 der Schraubenabdeckung 208 geführt wird. Schließlich verklemmt sich die nach oben verdickende Innenwand 213 in der Ringnut 211.

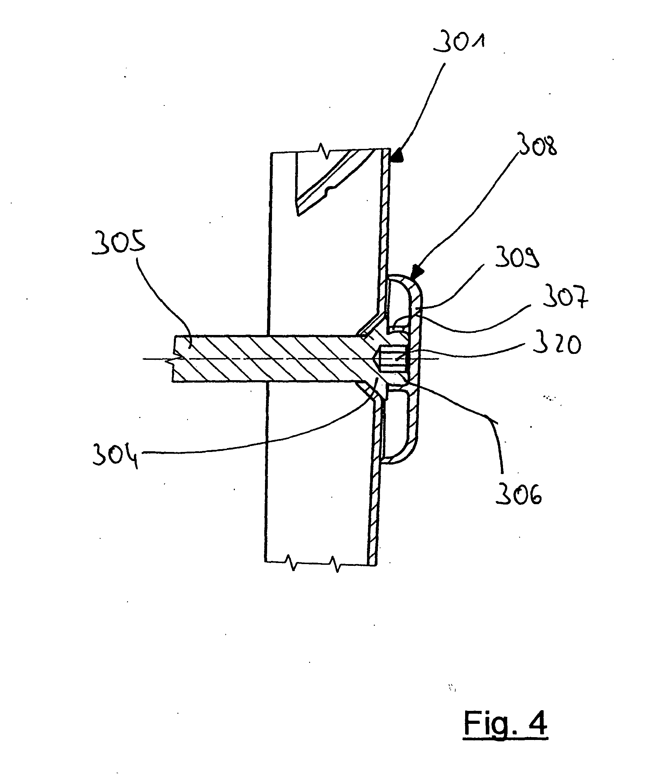

In Figur 4 ist ein viertes Ausführungsbeispiel mit einer der in Zusammenhang mit dem dritten Ausführungsbeispiel in Figur 3 dargestellten Unterputzabdeckplatte 201 ähnlichen Unterputzabdeckplatte 301 dargestellt. Das vierte Ausführungsbeispiel unterscheidet sich vom dritten, in Figur 3 dargestellten Ausführungsbeispiel dadurch, dass ein Aufsatz 306 eines Schraubenkopfs 304 einer Befestigungsschraube 305, in deren Mitte eine Innensechskantöffnung 320 angeordnet ist, mit einer teilkugeligen Mantelfläche versehen ist.

Aus der Innenseite eines Abdeckschirms 309 einer Schraubenabdeckung 308 geht ein Kugelklemmelement 307 einstückig hervor. Das Kugelklemmelement 307 umfasst einen ringförmigen, elastischen Kragen, dessen konkave Innenfläche komplementär zur Mantelfläche des Aufsatzes 306 ist.

Um die Schraubenabdeckung 308 am Schraubenkopf 304 zu befestigen, wird diese mit dem Kugelklemmelement 307 auf den Aufsatz 306 gepresst, wobei der Rand des Kugelklemmelementes 307 zunächst nachgibt, um dann wieder seine ursprüngliche Form anzunehmen. Der Aufsatz 306 wird so in dem Kugelklemmelement 307 eingeklemmt.

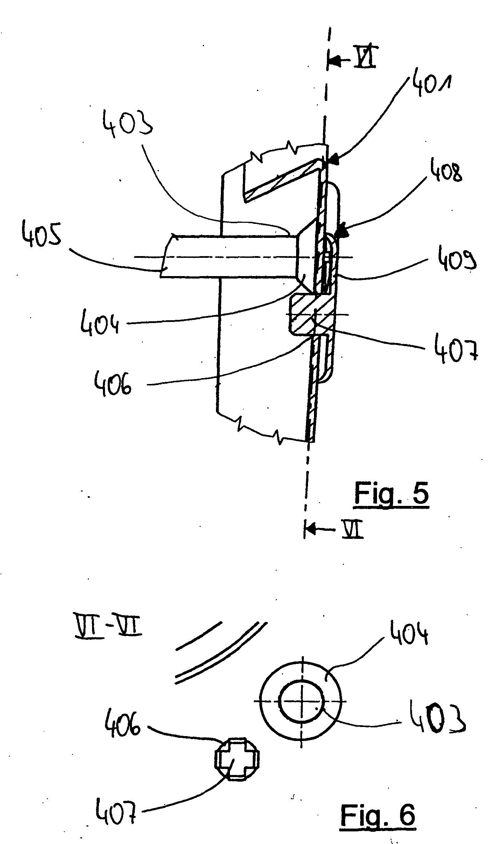

In den Figuren 5 und 6 ist ein fünftes Ausführungsbeispiel mit einer alternativen Unterputzabdeckplatte 401 dargestellt, bei dem im Unterschied zu den in den Figuren 1 bis 4 dargestellten ersten bis vierten Ausführungsbeispiel eine Schraubenabdeckung 408 nicht an einem Schraubenkopf 404 einer Befestigungsschraube 405, sondern an der Unterputzabdeckplatte 401 selbst befestigt ist.

In der Unterputzabdeckplatte 401 ist hierzu im Schnitt der Figur 6 schräg links unterhalb des Verschraubungslochs 403 ein kreuzförmiges Loch 406 angeordnet.

Aus der in Figur 5 linken Innenseite eines Abdeckschirms 409 der Schraubenabdeckung 408 ragt ein Kreuzzapfen 407 mit konstantem Querschnitt einstückig hervor, dessen Dimensionen etwas größer als die Dimensionen des Lochs 406 sind.

An seinem in Figur 5 linken Ende sind die Außenkanten des Kreuzzapfens 407 abgeschrägt, so dass der Kreuzzapfen 407 einfacher in das Loch 406 einführbar ist.

Der Kreuzzapfen 407 befindet sich nicht in der Mitte des Abdeckschirms 409, sondern ist gegenüber dieser versetzt angeordnet. Bei aufgesteckter Schraubenabdeckung 408 ist der Kreuzzapfen 407 unter Spannung in das Loch 406 eingeschoben, wobei das elastische Material des Kreuzzapfens 407 beim Einführen etwas nachgibt, so dass eine Kreuzklemmung entsteht. Hierbei verdeckt der Abdeckschirm 409 den Schraubenkopf 404 vollständig.

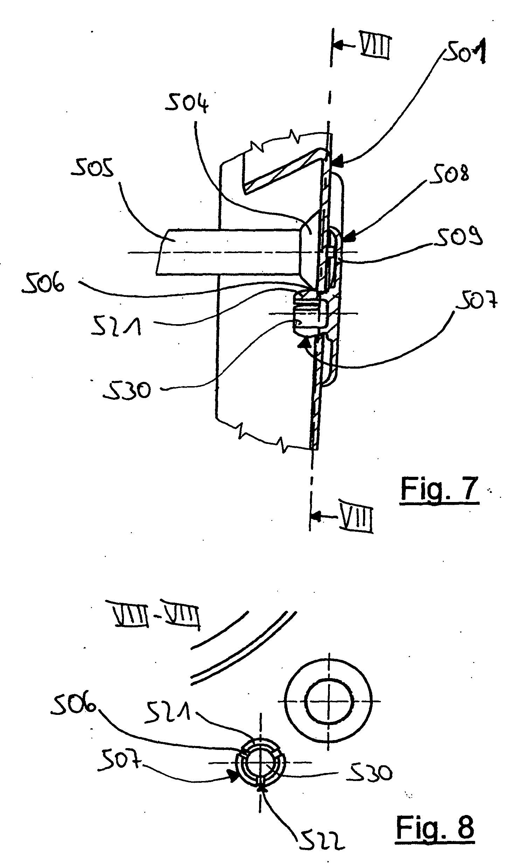

In den Figuren 7 und 8 ist ein sechstes Ausführungsbeispiel mit einer der im Zusammenhang mit dem fünften Ausführungsbeispiel in den Figuren 5 und 6 dargestellten Unterputzabdeckplatte 401 ähnlichen Unterputzabdeckplatte 501 dargestellt. Das sechste Ausführungsbeispiel unterscheidet sich vom fünften, in den Figuren 5 und 6 dargestellten Ausführungsbeispiel dadurch, dass statt des Kreuzzapfens 407 ein Kugelklemmelement 507 an der Schraubenabdeckung 508 vorgesehen ist.

Das Kugelklemmelement 507 umfasst drei aus der in Figur 7 linken Innenfläche eines Abdeckschirms 509 einer Schraubenabdeckung 508 einstückig hervorgehende Kugelabschnittselemente 521 um eine kreiszylinderförmige, senkrecht zur Innenfläche des Abdeckschirms 509 verlaufende Bohrung 530. Zwischen zwei benachbarten Kugelabschnittselementen 521 ist in Figur 8 jeweils ein Freiraum 522 vorgesehen, so dass sie elastisch radial zusammengebogen werden können, um den Außendurchmesser des Kugelklemmelementes 507 auf den Innendurchmesser eines Lochs 506 in der Unterputzabdeckplatte 501 anzupassen.

Wird das Kugelklemmelement 507 in das Loch 506 gesteckt, so geben die Kugelabschnittselemente 521 zunächst elastisch nach, um später wieder ihre ursprüngliche Form einzunehmen, so dass das Kugelklemmelement 507 im Loch 506 festgeklemmt ist.

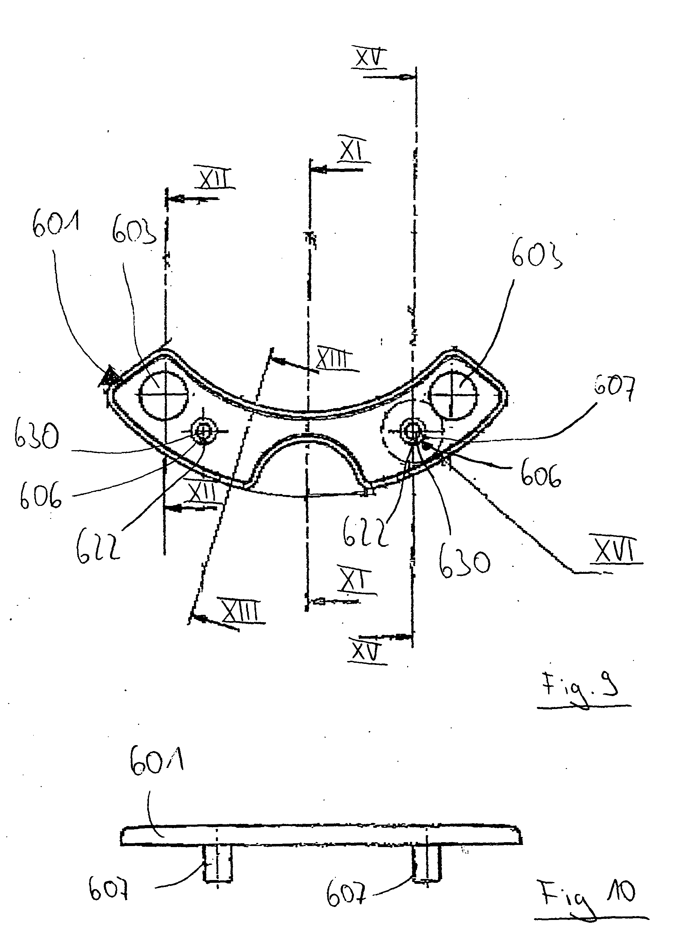

In den Figuren 9 bis 16 ist ein siebtes Ausführungsbeispiel mit einer in Zusammenhang mit dem sechsten Ausführungsbeispiel in den Figuren 7 und 8 dargestellten Unterputzabdeckplatte 501 ähnlichen Unterputzabdeckplatte 601 mit zwei entfernbaren Schraubenabdeckungen 608 dargestellt. Das vierte Ausführungsbeispiel unterscheidet sich vom sechsten, in den Figuren 7 und 8 dargestellten Ausführungsbeispiel im Wesentlichen dadurch, dass statt des Kugelklemmelementes 507 jeweils ein Zylinderklemmelement 607 an den Schraubenabdeckungen 608 vorgesehen ist. Darüber hinaus sind in der Oberfläche der Unterputzabdeckplatte 601 in Figur 9 rechts und links je eine Mulde 603 vorgesehen, die später in ihrem Zentrum durchbohrt werden können, um Verschraubungslöcher zu realisieren. Im Übrigen ist statt des Lochs 506 für das Kugelklemmelement 507 jeweils ein Loch 606 für die Zylinderklemmelemente 607 vorgesehen.

Das Zylinderklemmelement 607 umfasst einen aus der in Figur 15 rechten Innenfläche eines Abdeckschirms 609 der Schraubenabdeckung 608 einstückig hervorgehenden Hohlzylinder 621. Der Mantel des Hohlzylinders 621 ist über seine gesamte Länge in Figur 15 unten unterbrochen, so dass ein parallel zur Achse des Hohlzylinders 621 über dessen gesamte Länge verlaufender Freiraum 622 mit konstantem Querschnitt realisiert ist. Auf diese Weise kann der der Mantel des Hohlzylinders 621 elastisch radial zusammengebogen werden, um seinen Außendurchmesser auf den Innendurchmesser des entsprechenden Lochs 606 in der Unterputz-abdeckplatte 601 anzupassen.

Die Zapfen 7; 107, die Langlocheinheit 207, das Kugelklemmelement 307, der Kreuzzapfen 407, das Kugelklemmelement 507 und das Zylinderklemmelement 607 können auch in einer anderen Weise an der entsprechenden Schraubenabdeckung 8; 108; 208; 308; 408; 508; 608 befestigt sein.

Ebenso können die Aufsätze 206; 306 in anderer Weise als einstückig an dem entsprechen Schraubenkopf 204; 306 befestigt sein.

## Patentansprüche

1. Sanitäre Unterputzarmatur mit einer Unterputzabdeckplatte, die mit wenigstens einer Befestigungsschraube befestigbar ist,
**dadurch gekennzeichnet, dass**
der Schraubenkopf (4; 104; 204; 304; 404; 504) der Befestigungsschraube (5; 105; 205; 305; 405; 505) mit einer entfernbaren Schraubenabdeckung (8; 108; 208; 308; 408; 508; 608) verdeckt ist.

2. Sanitäre Unterputzarmatur nach Anspruch 1, **dadurch gekennzeichnet, dass** an die Schraubenabdeckung (8; 108; 208; 308; 408; 508; 608) ein Befestigungsmittel (7; 107; 207; 307; 407; 507; 607), insbesondere ein einstückig aus der Schraubenabdeckung (8; 108; 208; 308; 408; 508; 608) hervorgehendes oder an diese angeformtes Steckelement, aufweist.

3. Sanitäre Unterputzarmatur nach Anspruch 1 oder 2, **dadurch gekennzeichnet, dass** die Schraubenabdeckung (8; 108; 208; 308) am Schraubenkopf (4; 104; 204; 304) befestigt ist.

4. Sanitäre Unterputzarmatur nach Anspruch 1 oder 2, **dadurch gekennzeichnet, dass** die Schraubenabdeckung (408; 508; 608) an der Unterputzabdeckplatte (401; 501; 601) befestigt ist.

5. Sanitäre Unterputzarmatur nach Anspruch 3, **dadurch gekennzeichnet, dass** der Schraubenkopf (4; 104) eine Zapfenaufnahme (6; 106) und die Schraubenabdeckung (8; 108) einen hierzu komplementären Zapfen (7; 107) aufweisen.

6. Sanitäre Unterputzarmatur nach Anspruch 3, **dadurch gekennzeichnet, dass** der Schraubenkopf (204) einen Aufsatz (206) mit einem Kragen (212) und die Schraubenabdekkung (208) eine hierzu komplementäre Langlocheinheit (207), insbesondere mit einer Klemmeinheit, aufweisen.

7. Sanitäre Unterputzarmatur nach Anspruch 3, **dadurch gekennzeichnet, dass** der Schraubenkopf (304) einen Kugelaufsatz (306) und die Schraubenabdeckung (308) ein hierzu komplementäres Kugelklemmelement (307) aufweist.

8. Sanitäre Unterputzarmatur nach Anspruch 4, **dadurch gekennzeichnet, dass** die Unterputzabdeckplatte (401) ein Loch (406) und die Schraubenabdeckung (408) einen entsprechenden Kreuzzapfen (407) aufweist.

9. Sanitäre Unterputzarmatur nach Anspruch 4, **dadurch gekennzeichnet, dass** die Unterputzabdeckplatte (501) ein Loch (506) und die Schraubenabdeckung (508) ein entsprechendes Kugelklemmelement (507) aufweist.

10. Sanitäre Unterputzarmatur nach Anspruch 4, **dadurch gekennzeichnet, dass** die Unterputzabdeckplatte (601) ein Loch (606) und die Schraubenabdeckung (608) ein ent-sprechendes Zylinderklemmelement (607) aufweist.
